# EUROPEAN PATENT APPLICATION

(11) **EP 1 998 472 A1**
(43) Date of publication of application: **03.12.2008**
(21) Application number: 07301079.5
(22) Date of filing: 31.05.2007
(51) Int. Cl.: H04B 7/26

(54) **Method for synchronising a radio communication system, corresponding base station and terminal**

(71) Applicant: Alcatel Lucent, 75008 Paris (FR)
(72) Inventor: Weese, Kurt, 71254 Ditzingen (DE)
(74) Representative: Wetzel, Emmanuelle

(57) **Abstract**

The present invention relates to a method for synchronising a radio communication system comprising at least two base stations and a terminal adapted to perform a handover between said at least two base stations, the at least two base stations needing to be synchronised to the same time reference.

According to the present invention, the method is characterised in that it includes the steps of:
- upon handover of a terminal to a target base station, generating a message by said terminal included an information related to the time reference of said serving base station,
- upon reception of said message at said target base station, calculating the new target base station time reference in function of said information related to the time reference of said serving base station.

## Description

### BACKGROUND OF THE INVENTION

The present invention relates to a method for synchronizing a radio communication system.

Synchronization in a radio communication system is a key function which enables it to efficiently use the resources since the time slots allocated to the different elements of the radio communication network are accurately known.

In some communication networks, the synchronization is performed on purpose between the two counterparts of the communication i.e. the terminal and the base station. The synchronization takes place when a terminal likes to establish a connection to a base station. In some other communication networks, all elements should be synchronized to a common time reference. For example, WIMAX communication networks are networks requiring a common time reference for all elements of the network. In some embodiments of such networks, the time reference is shared by a GPS system, all base stations of the network are as a consequence equipped with a GPS receiver for getting the time reference and synchronizing each other. When the time reference drifts or get lost, the whole system experiences severe impairments. For example, in case the GPS receiver is disfunctionning, a base station will automatically loose synchronization and will no more be able to operate in a proper way.

A particular object of the present invention is to provide a way of improving synchronization in case a common time reference is to be shared between all elements of a radio communication system.

Another object of the invention is to provide a corresponding terminal and base station belonging to this system.

### SUMMARY OF THE INVENTION

These objects, and others that appear below, are achieved by a method for synchronizing a radio communication system according to claim 1, a base station according to claim 6 and a terminal according to claim 7.

According to the present invention, when a terminal is in a handover situation between a serving base station and a target base station, the serving base station shares its time reference with the terminal. Then, the terminal includes an information related to the time reference shared by the serving base station in a message destined to the target base station. Upon reception of this message, the target base station is able to derive from the received information the time reference it should use for further operation. In a first embodiment of the present invention, the target base station first detects if its own time reference acquisition mechanism is well working or if it is disfunctioning and then only uses the time reference derived from the handover message if the time acquisition mechanism is disfunctioning. In another embodiment of the present application, the base station may use the time reference derived from the handover message in any case.

The method according to the present invention presents the advantage to further propagate a usable time reference even if the stand alone means for time reference acquisition in a base station are disfunctioning.

Another advantage of the present invention consists in being able in some case to save money by avoiding stand alone means for time reference acquisition, as GPS receiver, in some base station of the radio communication network, using the fact that the time reference may be accurately propagated from one base station to its neighboring base station thanks to numerous handover between these two base stations.

Further advantageous features of the invention are defined in the dependent claims.

### BRIEF DESCRIPTION OF THE DRAWINGS

Other characteristics and advantages of the invention will appear on reading the following description of a preferred embodiment given by way of non-limiting illustrations, and from the accompanying drawings, in which:
- Figure 1 shows a radio communication system where the method according to the present invention can be implemented;
- Figure 2 shows a flow diagram showing the different steps of the method according to the present invention;
- Figure 3 details a base station according to the present invention.
- Figure 4 shows a terminal according to the present invention.

### DETAILED DESCRIPTION OF THE INVENTION

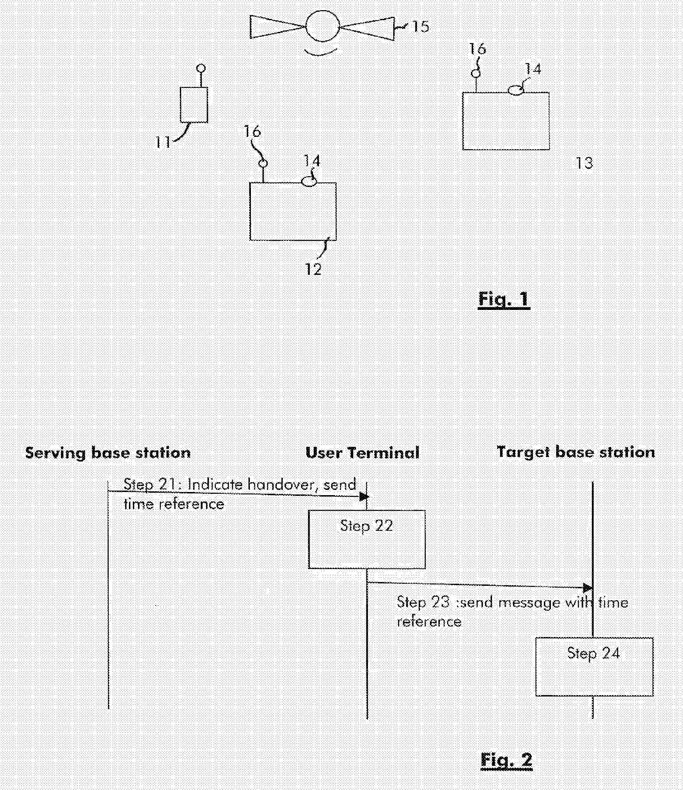

Figure 1 shows a radio communication system where the method according to the present invention can be implemented. The radio communication systems comprises at least two base stations 11, 12 and a terminal 13. The radio communication networks requires synchronized base stations 11, 12 for proper operation mode. In this example, the base stations 11, 12 comprise a GPS receiver 14 for getting a common time reference sent over GPS preferably form a satellite 15. In addition, the base stations 11, 12 comprise an antenna 16 for usual communication over the radio communication network.

Alternatively, the target base station 12 may not have a GPS receiver 14 and will consequently only have the possibility to get synchronized through the method according to the present invention. This would present the advantage of reducing the number of expensive base stations comprising a GPS receiver in the network.

The radio communication network may be WIMAX radio communication network functioning in TDD mode or any other type of radio communication network requiring a synchronization of the base stations for proper functioning. Consequently the network type is not limited to WIMAX nor to TDD mode. Other examples may be CDMA.

Base station 11 serving terminal 13 is able to share its time reference with terminal 13. This may be performed in that a message is sent during the handover procedure from serving base station 11 to terminal 13 comprising a time reference field.

According to the present invention, upon handover of terminal 13 from base station 11 to base station 12, a message is further sent from terminal 13 to base station 12 comprising an information related to the time reference shared by base station 11. This may simply consist in forwarding the time reference received from the serving base station to the target base station.

Upon reception of this information related to the time reference, base station 12 can through appropriate means deduce the common time reference used in the radio communication network.

In a first embodiment of the present invention, base station 12 only needs to derive the common time reference from the message received from terminal 13 if base station 12 has detected that it has lost synchronization to the network, for example due to a defect GPS receiver. For this purpose, base station 12 may estimate the single trip delay of the message from terminal 13 to base station 12 and add this single trip delay to the time reference contained in the message in order to derive the current time reference. A possible solution of estimating the single trip delay consists but is not limited to measurement of the phase delay of the received signal. Then, the time reference is further incremented by base station 12 in order to follow the time reference for the further operation of base station 12. In this embodiment base station 12 should be equipped with means enabling it to detect a synchronization loss. Such means could consist but are not restricted to supervision of the GPS receiver.

In an alternative embodiment of the present invention, base station 12 may perform the step of deriving the common time reference from the message received from terminal 13 even with a functioning GPS receiver and deduce additional information by comparing the time reference known at target base station 12 and the time reference deduced from the message received from terminal 13. Such additional information may for example be linked to the positioning of the terminal. By this means, the single time delay can be deduced and as a consequence the distance of the terminal to the base station. Other additional information may also be deduced from this difference.

Figure 2 shows a flow diagram with different steps of the method according to the present invention.

In step 21, the base station 11 serving terminal 13 sends a message indicating that an handover should take place towards target base station 12. The handover message sent to terminal 13 could according to the present invention comprise a field containing the time reference used at serving base station 11. Alternatively a separate message containing the used time reference may be exchanged between base station 11 and terminal 13 in connection with the handover procedure.

In step 22, user terminal 13 extracts the time reference received from the message sent by serving base station 11.

In step 23, user terminal 13 sends a message with the extracted time reference to the target base station of the handover procedure.

In step 24, the target base station extracts the time reference from the message received from terminal 13 and uses it to update its own time reference.

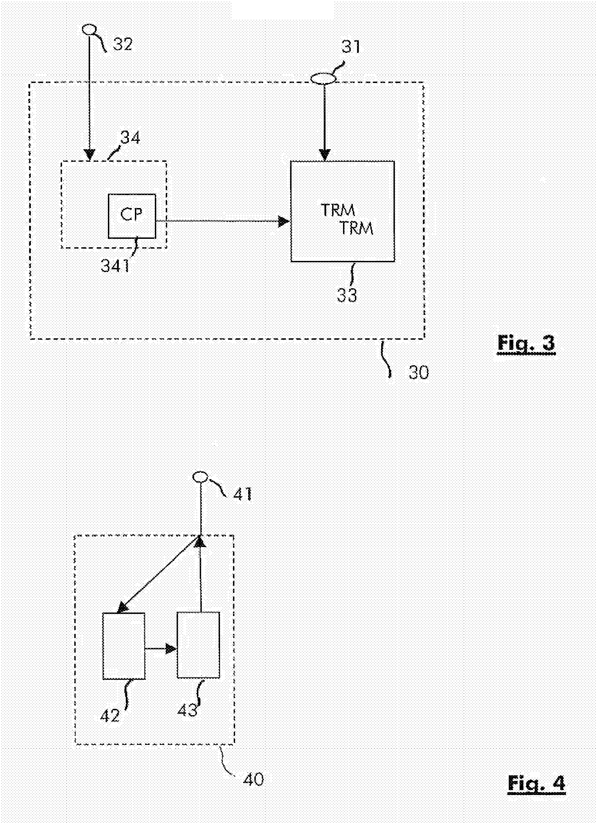

Figure 3 details a base station according to the present invention.

Base station 30 comprises a GPS receiver 31, an antenna 32 for communicating over a radio communication network, a time reference module 33 connected to GPS receiver 31 and a receiver part 34 connected to antenna 32.

Alternatively to GPS receiver 31, the base station may comprise any other type of means for receiving a time reference from an external source not belonging to the radio communication network as for example the fiber based communication network as FDDI. It will be understood by those skilled in the art that a GPS receiver is a preferred but not exclusive embodiment of these means for receiving and external time reference.

According to the present invention receiver part 34 receives a message over antenna 32 comprising a time reference. Receiver part 34 further comprises means 341 for calculating a current time reference and means for updating the time reference module 33 according to the calculated current time reference.

Figure 4 shows a terminal according to the present invention. Terminal 40 comprises a receiver part 42 and a transmitter part 43 both connected to antenna 41 for communicating with a radio communication system. According to the present invention, terminal 40 receives in the receiver part 42 a message from a serving base station upon handover containing a time reference. According to the present invention, the time reference is extracted from the message and transmitted in another message toward a target base station For this purpose, terminal 30 comprises means for including an information related to a time reference of its serving base station in a message sent to a target base station which is determined by the handover procedure.

## Claims

1. Method for synchronising a radio communication system comprising at least two base stations (11, 12) and a terminal (13) adapted to perform a handover between said at least two base stations (11, 12), said at least two base stations (11, 12) needing to be synchronised to the same time reference, said method being **characterised in that** it includes the steps of:
- upon handover of said terminal (13) to a target base station (12), generating a message by said terminal (13) including an information related to the time reference of said serving base station (11),
- upon reception of said message at said target base station (12), calculating the new target base station time reference in function of said information related to the time reference of said serving base station (11).

2. Method according to claim 1, further comprising the step of detecting at said target base station (12) a loss of synchronisation.

3. Method according to claim 1, wherein said serving base station comprises a GPS receiver (14) and is time synchronised through a common time reference shared by said GPS receiver (14).

4. Method according to claim 3, wherein said message sent from said terminal to said target base station further comprises an indication on the facts that the serving base station serving said terminal is GPS synchronised.

5. Method according to claim 1, wherein said radio communication network is a TDD system.

6. Base station (30) adapted to be used in a radio communication system further comprising at least one terminal, said base station (30) needing to be synchronised to other base stations with a common time reference in said radio communication system, said base station (30) being **characterized in that** it comprises:
- means (34) for receiving a message from a terminal during an handover procedure, said message comprising an information related to a time reference of a synchronised base station currently serving said terminal;
- means (33) for setting said base station time reference as a function of said information related to a time reference.

7. Terminal (40) adapted to be used in a radio communication network comprising base stations all synchronised to a common time reference, said terminal comprising means (43) for including an information related to a time reference of its serving base station in a message sent to a target base station upon handover to said target base station.
